## Europäisches Patentamt
## European Patent Office
## Office européen des brevets

(19)

(11) Veröffentlichungsnummer : **0 095 098**
**B1**

(12)

# EUROPÄISCHE PATENTSCHRIFT

(45) Veröffentlichungstag der Patentschrift :
04.03.87

(21) Anmeldenummer : 83104693.3

(22) Anmeldetag : 13.05.83

(51) Int. Cl.⁴ : **C 08 L 71/04, C 08 L 25/10,**
**C 08 L 23/08, C 08 L 23/18,**
**C 08 L 23/16, C 08 L 53/02//**
**C08L23/16**

(54) **Thermoplastische Formmassen.**

(30) Priorität : 21.05.82 DE 3219048

(43) Veröffentlichungstag der Anmeldung :
30.11.83 Patentblatt 83/48

(45) Bekanntmachung des Hinweises auf die Patenterteilung : 04.03.87 Patentblatt 87/10

(84) Benannte Vertragsstaaten :
**BE DE FR GB NL**

(56) Entgegenhaltungen :
**DD-A- 134 238**
**DE-A- 2 750 242**
**DE-A- 2 750 515**
**DE-A- 2 842 773**
**DE-A- 3 038 551**
**US-A- 4 172 826**

(73) Patentinhaber : BASF Aktiengesellschaft
**Carl-Bosch-Strasse 38**
**D-6700 Ludwigshafen (DE)**

(72) Erfinder : **Hambrecht, Juergen, Dr.**
**Werderstrasse 30**
**D-6900 Heidelberg (DE)**
Erfinder : **Brandstetter, Franz, Dr.**
**Ritterbueschel 45**
**D-6730 Neustadt (DE)**
Erfinder : **Echte, Adolf, Dr.**
**Leuschnerstrasse 42**
**D-6700 Ludwigshafen (DE)**

Jouve, 18, rue St-Denis, 75001 Paris, France

EP 0 095 098 B1

**Beschreibung**

Die Erfindung betrifft thermoplastische Formmassen auf der Grundlage von schlagfest modifizierten Styrolpolymerisaten und Polyphenylenethern.

Thermoplastische Massen, die sich zur Herstellung von Formteilen eignen und die schlagzäh modifizierte Styrolpolymerisate und Polyphenylenether enthalten sind z. B. aus den US-Patentschriften 3 383 435, 4 128 602 sowie 4 128 603 bekannt. Solche Formmassen eignen sich zur Herstellung von Formteilen, die sich im Vergleich zu schlagzäh modifizerten Styrolpolymerisaten, die nicht mit Polyphenylenethern abgemischt sind, durch eine bessere Wärmeformbeständigkeit auszeichnen. Die Materialeigenschaften derartiger Formmassen sind im allgemeinen zufriedenstellend, doch hat es sich gezeigt, daß Formteile eine mitunter nicht ausreichende Schlagzähigkeit haben.

Es ist deshalb verschiedentlich vorgeschlagen worden, die Schlagzähigkeit durch Zugabe von elastomeren Blockmischpolymerisaten zu erhöhen. Zum Stand der Technik nennen wir:
(1) DE-AS 1 932 234, (2) DE-OS 2 434 848, (3) DE-OS 2 713 509, (4) DE-OS 2 750 242, (5) DE-OS 2 750 515, (6) DE-OS 3 038 551, (7) DE-OS 2 842 773.

In (1)-(6) wird die Zugabe von unterschiedlich aufgebauten hydrierten und/oder nichthydrierten Blockmischpolymeren, die vornehmlich aus polymerisierten vinylaromatischen Kohlenwasserstoffblöcken und polymerisierten konjugierten Dienpolymerisatblöcken bestehen, beschrieben. Diese Mischungen zeichnen sich durch eine verbesserte Schlagzähigkeit aus. In (7) wird zusätzlich zu den elastomeren Blockmischpolymeren ein Polyolefinharz hinzugegeben. Auch dadurch soll die Schlagzähigkeit der Mischungen aus schlagfestem Polystyrol und Polyphenylenethern verbessert werden. Allen diesen Mischungen ist jedoch gemein, daß die Zugabe der elastomeren Blockmischpolymerisate und Polyolefinharze zu einer Absenkung der Wärmeformbeständigkeit führt und die Erhöhung der Schlagzähigkeit z. T. nicht ausreicht.

Aufgabe der vorliegenden Erfindung war es deshalb, thermoplastische Formmassen auf der Grundlage von schlagfest modifizierten Styrolpolymerisaten und Polyphenylenethern zu schaffen, die zu Formteilen mit einer verbesserten Schlagzähigkeit bei gleichzeitig wenig veränderter hoher Wärmeformbeständigkeit verarbeitet werden können.

Diese Aufgabe wird erfindungsgemäß gelöst durch Formmassen, auf der Grundlage von schlagfest modifizierten styrolpolymerisierten Polyphenylenethern und eine die Schlagfestigkeit verbessernde Kombination aus einem elastomeren Blockmischpolymerisat vom AB, ABA' und/oder (AB)$_n$-X-Typ, in welchem A und A' polymerisierte vinylaromatische Kohlenwasserstoffblöcke sind, B hydrierte und/oder nichthydrierte von polymerisierten konjugierten Dienen abgeleitete Blöcke darstellen, X für den Rest eines multifunktionellen Kupplungsmittels steht und n eine ganze Zahl von mindestens 3 darstellt, und einem Ethylencopolymerisat, wobei die Formmassen
A) 90-10 Gewichtsteile des elastomeren Blockmischpolymerisats und
B) 10-90 Gewichtsteile eines Ethylencopolymerisats enthalten, das eine Dichte von d = 0,910 (g/cm$^3$) hat und aus
b$_1$) 80-99 Gew.-% Ethylen und
b$_2$) 1-20 Gew.-% eines 1-Olefins mit mindestens 4 C-Atomen '
besteht.

Unter Formmassen sollen ungeformte Mischungen verstanden werden, die sich durch thermoplastische Verarbeitung innerhalb bestimmter Temperaturbereiche zu Formteilen oder zu Halbzeug verarbeiten lassen. Die Formmassen können als Granulat vorliegen, sie können aber auch pulverförmig oder durch Tablettierung vorgeformt oder in Form von Platten und Bahnen vorliegen.

Die thermoplastischen Formmassen können schlagfest modifizierte Styrolpolymerisate und Polyphenylenether in beliebeigen Mengen, beispielsweise in Mengen von 5 bis 90 Gew.% Styrolpolymerisat und 95 bis 10 Gew.% Polyphenylenether enthalten. Für die Herstellung von Formteilen eignen sich insbesondere solche Formmassen, die 20 bis 80 Gew.% schlagfest modifizierte Styrolpolymerisate und 80 bis 20 Gew.% Polyphenylenether enthalten.

Zusätzlich enthalten die erfindungsgemäßen Formmassen 3 bis 30, vorzugsweise 5 bis 20 Gewichtsteile, bezogen aud 100 Gewichtsteile der obigen Gesamtmischung einer die Schlagzähigkeit verbessernden Kombination aus einem Blockmischpolymerisat A) und einem Ethylencopolymerisat B).

Die in den erfindungsgemäßen Formmassen enthaltenen Styrolpolymerisate können beispielsweise durch Mischen von Polymerisaten mit einer bestimmten Teilchengröße mit solchen Polymerisaten mit anderen Teilchengrößen erhalten werden. So kann man beispielsweise 90 Gewichtsteile eines Polymerisates mit einer mittleren Teilchengröße von 0,6 µm und 10 Gewichtsteilen eines Polymerisates mit einer mittleren Teilchengröße von 6 µm verwenden.

Besonders geeignet sind solche thermoplastische Formmassen, in denen die mittlere Teilchengröße im Bereich von 0,6 bis 4 µm liegt und in denen 99 bis 85 Gew.% der Teilchen einen Teilchendurchmesser von 0,3 bis 0,9 µm und 1 bis 20 Gew.% der Teilchen einen Durchmesser von 3 bis 7 µm haben.

Die meist angewandten Verfahren zur Herstellung schlagzäh modifizierter Styrolpolymerisate sind die Polymerisation in Masse oder Lösung, wie sie beispielsweise in der US-PS 2 694 692 beschrieben sind und Verfahren zur Masse-Suspensionspolymerisation, wie sie beispielsweise in der US-PS 2 862 906 beschrieben sind. Selbstverständlich sind auch andere Verfahren anwendbar, sofern die obengenannte Teilchengrößenkombination eingestellt wird.

Die schlagfest modifizierten Styrolpolymerisate können auch andere monovinylaromatische Verbindungen enthalten, z. B. die kern- oder seitenkettenalkylierten Styrole.

Als Kautschuke werden die üblicherweise für die Schlagfestmodifizierung von Styrolpolymerisaten gebräuchlichen natürlichen oder synthetischen Kautschuke eingesetzt. Geeignete Kautschuke im Sinne der Erfindung sind neben Naturkautschuk z. B. Polybutadien, Polyisopren und Mischpolymerisate des Butadiens und/oder Isoprens mit Styrol und anderen Comonomeren, die eine Glastemperatur unter — 20 °C besitzen. Besonders eignen sich Butadien-Polymerisate mit einem 1,4-cis-Gehalt, der zwischen 25 und 98 liegt. Es können aber auch Acrylatkautschuke, EPDM-Polybutylen- und Polyoctenamerkautschuke eingesetzt werden.

Bei den Polyphenylenethern handelt es sich um Verbindungen auf der Basis von in ortho-Position disubstituierten Polyphenylenoxiden, wobei der Ethersauerstoff der einen Einheit an den Benzolkern der benachbarten Einheit gebunden ist. Dabei sollen mindestens 50 Einheiten miteinander verknüpft sein. Die Polyether können in ortho-Stellung zum Sauerstoff Wasserstoff, Halogen, Kohlenwasserstoffe, die kein α-ständiges tert. Wasserstoffatom besitzen, Halogenkohlenwasserstoffe, Phenylreste und Kohlenwasserstoff-oxi-Reste tragen. So kommen in Frage : Poly(2,6-dichlor-1,4-phenylen)-ether, Poly(2,6-diphenyl-1,4-phenylen)-ether, Poly(2,6-dimethoxy-1,4-phenylen)-ether, Poly(2,6-dimethyl-1,4-phenylen)-ether, Poly(2,6-dibrom-1,4-phenylen)-ether. Bevorzugterweise wird der Poly(2,6-dimethyl-1,4-phenylen)-ether eingesetzt. Ganz besonders bevorzugt werden Poly(2,6-dimethyl-1,4-phenylen)-ether mit einer Grenzviskosität zwischen 0,40 und 0,66 dl/g (gemessen in Chloroform bei 30 °C).

Die aromatischen Polyether können durch Selbstkondensation der entsprechend einwertigen Phenole durch Einwirken von Sauerstoff in Gegenwart eines Katalysatorsystems, wie es beispielsweise in den US-Patentschriften 3 219 625, 3 306 875, 3 956 442, 3 965 069, 3 972 851 beschrieben ist, hergestellt werden.

Bei den in der die Schlagzähigkeit verbessernden Kombination enthaltenen hydrierten, Styrol enthaltenden Blockcopolymerisaten (Komponente A, A'), handelt es sich um Copolymere des Typs AB bzw. ABA' bzw. $(A-B)_n$-X. Hierin steht A und A' für einen nichtelastomeren Polymer-Block aus der monovinylaromatischen Verbindung, B für einen elastomeren hydrierten Block eines konjugierten Diens, n für eine ganze Zahl von mindestens 3 und X für den Rest eines multifuntionellen Kupplungsmittels, über den die Verzweigungen (A-B) des Blockcopolymerisates chemisch miteinander verbunden sind.

Monovinyl- und monovinylidenaromatische Verbindungen, die für den Aufbau der endständigen nicht-elastomeren Polymerblöcke der verzweigten Blockcopolymerisate in Betracht kommen, sind beispielsweise Styrol, die seitenkettenalkylierten Styrole, wie α-Methylstyrol, und die kernsubstituierten Styrole, wie Vinyltoluol, Ethylvinylbenzol und andere. Die monovinyl- und monovinylidenaromatischen Verbindungen können auch in Mischung miteinander eingesetzt werden. Vorzugsweise wird jedoch Styrol allein verwendet.

Konjugierte Diene, die für die erfindungsgemäßen hydrierten Polymerisate insbesondere in Betracht kommen, sind beispielsweise Butadien-1,3 sowie Isopren. Diese Diene werden entweder allein oder in Mischung miteinander für die Herstellung der Blockcopolymerisate herangezogen.

Die Molekulargewichte der Blockcopolymerisate können in weiten Grenzen schwanken, jedoch werden bei sehr niedrigem Molekulargewicht unter 10 000 nur schlechte mechanische Werte für die Abmischungen erreicht, während bei sehr hohen Molekulargewichten, z. B. über 1 000 000 die Einarbeitung schwierig wird. Das Blockcopolymerisat soll vorzugsweise zwischen 15 und 50 Gewichtsprozent Vinylaromaten enthalten.

Die Blockcopolymerisate können auf an sich bekannte Art und Weise durch aufeinanderfolgende Polymerisation der Monomeren in Lösung in Gegenwart eines Monolithium-Kohlenwasserstoffes als Initiator — gegebenenfalls durch anschließendes Kuppeln der erhaltenen aktiven, lebenden linearen Blockcopolymerisate mit einer multifunktionellen, reaktionsfähigen Verbindung als Kupplungsmittel — und nachfolgende selektive Hydrierung der olefinischen Doppelbindungen der erhaltenen Blockcopolymerisate hergestellt werden. Als Initiator geeignete Monolithium-Kohlenwasserstoffe sind solche der allgemeinen Formel RLi, worin R einen aliphatischen, cycloaliphatischen, aromatischen oder gemischt aliphatischen-aromatischen Kohlenwasserstoffrest mit 1 bis 12 Kohlenstoffatomen darstellt und insbesondere ein aliphtischer Kohlenwasserstoffrest ist. Beispielhaft seien genannt : Ethyllithium, (n-, sec-, tert-)Butyllithium, Isopropyllithium und Phenyllithium, wobei n- und sec-Butyllithium besonders bevorzugt sind.

Als Lösungsmittel bei der Herstellung der Blockcopolymerisate dienen normalerweise inerte aliphatische, cycloaliphatische oder aromatische Kohlenwasserstoffe, wie z. B. n-Hexan, Heptan, Isoctan ; Cyclohexan, Cycloheptan ; Benzol, Toluol und andere. Die Polymerisation wird dabei in Gegenwart geringer Mengen an polaren Lösungsmitteln, beispielsweise Aminen, Alkoholaten und insbesondere Ethern, wie Tetrahydrofuran, Dimethoxyethan, Phenylmethylether und anderen, durchgeführt. Die polaren Lösungsmittel werden im allgemeinen in Mengen von 0,05 bis 10 Gew.%, vorzugsweise von 0,1 bis 2 Gew.%, bezogen auf das gesamte Lösungsmittel, eingesetzt. Die Polymerisation erfolgt unter den für die anionische Polymerisation mit lithiumorganischen Verbindungen üblichen Bedingungen, wie z. B. in Inertgas-Atmosphäre unter Luft- und Feuchtigkeitsausschluß. Die Polymerisationstemperaturen liegen im allgemeinen zwischen 0 und 150 °C und werden vorzugsweise zwischen 20 und 100 °C gehalten.

Zur Herstellung von sternförmig verzweigten Blockcopolymerisate werden zunächst die monovinyl- bzw. monovinylidenaromatischen Verbindungen mit Hilfe der Monolithium-Kohlenwasserstoffe bis zur praktisch vollständigen Umsetzung der Monomeren polymerisiert und anschließend wird zu der Lösung der resultierenden aktiven living-Polymerisate das Butadien zugesetzt, welches an die aktiven Kettenenden der zuvor gebildeten lebenden Polymerisate der monovinyl- bzw. monovinylidenaromatischen Verbindungen unter Bildung der Polybutadien-Blöcke angelagert wird. Nach Beendigung der Polymerisation, jedoch vor der Desaktivierung des Initiators wird zu der Reaktionslösung eine multifunktionelle reaktive Verbindung als Kupplungsmittel zugesetzt. Das verwendete multifunktionelle Kupplungsmittel soll mindestens trifunktionell sein, d. h. es soll fähig sein, mindestens drei oder mehr der zuvor gebildeten aktiven linearen Blockcopolymerisate an deren endständigen Lithium-Kohlenstoff-Bindungen unter Ausbildung einer chemischen Verknüpfung miteinander zu verbinden, um ein einziges gekuppeltes und somit sternförmig verzweigtes Blockcopolymerisat zu bilden. Die Herstellung derart verzweigter Blockcopolymerisate durch Kupplung ist beispielsweise in der GB-PS 985 614 beschrieben.

Als Kupplungsmittel eignen sich die bekannten multifunktionellen Verbindungen, beispielsweise Polyepoxide, wie epoxidiertes Leinsamenöl, Polyisocyanate, Polyhalogenide, Polyketone, Polyanhydride, Estergruppen enthaltende Verbindungen, insbesondere Dicarbonsäureester, wie Diethyladipat, sowie polyvinylaromatische Verbindungen, insbesondere Divinylbenzol. Das multifunktionelle Kupplungsmittel wird der Reaktionslösung im allgemeinen in Mengen zugegeben, die äquivalent der Menge des eingesetzten Initiators sind. Die Kupplung kann bei der gleichen Temperatur wie die Polymerisation durchgeführt werden und erfolgt vorzugsweise im Temperaturbereich von 20 bis 100 °C.

Anschließend an die Polymerisation und zweckmäßigerweise vor der Isolierung des Reaktionsproduktes aus der Reaktionslösung werden die olefinischen Doppelbindungen der erhaltenen Blockcopolymerisate selektiv hydriert. Die selektive Hydrierung kann dabei ebenfalls in üblicher Art und Weise mit Hilfe von molekularem Wasserstoff und Katalysatoren auf Basis von Metallen oder Metallsalzen der 8. Gruppe des Periodensystems durchgeführt werden, wie es beispielsweise in der US-PS 3 113 986, der DE-AS 1 222 260, der DE-OS 2 013 263 oder der US-PS 3 700 633 beschrieben ist. Hiernach wird die selektive Hydrierung der olefinischen Doppelbindungen vorzugsweise in homogener Phase mit Katalysatoren auf Basis von Salzen, insbesondere den Carboxylaten, Enolaten oder Alkoxiden, des Nickels, Cobalts oder Eisens, die mit Metallylkylen, insbesondere Aluminiumalkylen, reduziert sind, bei Wasserstoffdrücken zwischen 1 und 100 bar und Temperaturen zwischen 25 und 150 °C vorgenommen. Die selektive Hydrierung wird soweit getrieben, bis der Gehalt an olefinischen Doppelbindungen in den Blockcopolymerisaten bis auf einen Restanteil von weniger als 10 %, vorzugsweise weniger als 5 %, reduziert worden ist. Der Restanteil der olefinischen Doppelbindungen wird durch Titration nach Wijs oder durch IRspektroskopische Analyse bestimmt. Insbesondere wird bis zur praktisch vollständigen Reduzierung der olefinischen Doppelbindungen hydriert. Vorzugsweise wird die Hydrierung so geführt, daß dabei die aromatischen Doppelbindungen des Blockcopolymerisats nicht angegriffen werden.

Die beschriebenen elastomeren Blockmischpolymerisate der Komponente A) sind in der die Schlagzähigkeit verbessernden Kombination aus den Komponenten A) + B) zu 10 bis 90, vorzugsweise 30-70 Gewichtsteilen enthalten.

Bei der Komponente B) handelt es sich um LLDPE. Diese Produkte werden i. a. in Gegenwart von metallorganischen Katalysatoren durch die Copolymerisation von Ethylen $b_1$) mit höheren α-Olefinen in der Gasphase, in Lösung bzw. Suspension bei Drücken bis zu 2 000 bar hergestellt. Bevorzugt verwendet man als Comonomer $b_2$) Buten-1, Hexen-1 4-Methyl-penten-1, bzw. Octen-1. Die Herstellung derartiger Produkte ist beispielsweise in der DE-OS 1 795 109, US-PS 4 076 698, DE-OS 2 350 739 beschrieben.

Die Ethylencopolymerisate der Komponente B) enthalten 80 bis 99, vorzugsweise 85 bis 97 Gewichtsteile Ethylen $b_1$) und entsprechend auf 100 Gewichtsteile ergänzt Comonomere des Typs $b_2$). Bevorzugte eingesetzte Comonomere $b_2$) sind Buten-1 und Octen-1.

Wesentliche weitere Kennzeichen dieser Ethylencopolymerisate sind deren Dichte von 0,910 bis 0,940, vorzugsweise 0,915 bis 0,935 [g/cm$^3$], und deren Meltindices, die bei 0,5 bis 30, vorzugsweise 0,8 bis 25 [g/10'], liegen, gemessen bei 190 °C und 2,16 Kp.

Die Komponente B) ist in der die Schlagzähigkeit verbessernden Kombination aus A) und B) zu 10 bis 90, vorzugsweise 30-70 Gewichtsteilen enthalten.

Die Mischungen aus den schlagzäh modifizierten Styrolpolymerisaten, Polyphenylenethern und der die Schlagzähigkeit verbessernden Kombination aus einem elastomeren Blockmischpolymeren und einem Ethylencopolymeren können außerdem weitere Zusatzstoffe wie Pigmente, Farbstoffe, Füllstoffe, Flammschutzmittel, weitere verträgliche Polymere, Antistatika, Antioxidantien und Schmiermittel enthalten. Man stellt die erfindungsgemäßen thermoplastischen Formmassen wie üblich auf Vorrichtungen, die ein homogenes Mischen zulassen, wie Knetern, Extrudern oder Walzenmischgeräten her.

Die erfindungsgemäßen Formmassen besitzen neben einer hohen Wärmeformbeständigkeit hohe Kerbschlagzähigkeit und hohe Zähigkeiten im Fallrohrtest.

Die folgenden Beispiele dienen dazu, die Erfindung zu beschreiben. Die angegebenen Teile sind Gewichtsteile, es sei denn, es ist anders angegeben.

Die Intrinsikviskosität des Polyphenylenethers wurde durch Messung an 0,5 %igen Lösungen in Chloroform bei 30 °C bestimmt.

Die Bruchenergie wurde nach DIN 53 443, Blatt 1 bei 23 °C, die Kerbschlagzähigkeit nach DIN 53 433 bei 23 °C gemessen. Die Fließfähigkeit wurde anhand des Schmelzindex nach DIN 53 735 ermittelt und die Wärmeformbeständigkeit anhand des Erweichungspunktes nach Vicat entsprechend DIN 53 460/B bestimmt.

Die Dichte der Ethylencopolymerisate wurde gemäß DIN 53 479 ermittelt.

## Beispiele und Vergleichsversuche

I. Herstellung der schlagzähmodifizierten Polystyrole

$A_1$) Herstellung eines schlagfesten Polystyrols (mit einer mittleren Teilchengröße von 0,5 μm :

In einem 5 l-Rührkessel mit Blattrührer wird eine Lösung bestehend aus

1 560 g Styrol  
240 g Butadien/Styrol-Blockcopolymerisat mit verschmiertem Übergang zwischen den Blöcken : $[\eta]$ = 1,74 dl/g  
Toluol 25° ; Blockpolystyrol = 31,0 % ;  
$[\eta]$ = 0,364 dl/g (Toluol 25 °C) ;  
Gesamtstyrolgehalt = 41,6 %  
1,6 g t-Dodecylmercaptan  
2,2 g Octadecyl-3(3',5'-di-tert.-butyl-4-hydroxyphenyl)-propionat und  
1,7 g Dicumylperoxid  

bei 110 °C Innentemperatur und einer Rührerdrehzahl von 150 Upm bis zu einem Feststoffgehalt von 43,8 Gew.% vorpolymerisiert.

Anschließend werden 1 800 ml Wasser, die 9,0 g Polyvinylpyrrolidon vom K-Wert 90 und 1,8 g $Na_4P_2O_7$ enthalten zugesetzt und die Rührerdrehzahl auf 300 Upm erhöht. Durch Nachpolymerisation von 5 Stunden bei 120 °C und 5 Stunden bei 140 °C wird bis zu einem Styrolumsatz 99 % auspolymerisiert.

$A_2$) Herstellung eines schlagfesten Polystyrols mit einer mittleren Teilchengröße von ca. 6 μm :

In einem 4 l-Rührkessel mit Blattrührer wird eine Lösung bestehend aus

1 283 g Styrol  
112 g Polybutadien (1,2-Vinylgehalt ca. 9 Gew.%)  
1,5 g t-Dedecylmercaptan  
1,5 g Octadecyl-3(3',5'-di-tert.-butyl-4'-hydroxiphenyl)-propionat  
1,5 g Dicumylperoxid  

bei 110 °C Innentemperatur und einer Rührerdrehzahl von 150 Upm bis zu einem Feststoffgehalt von 25,4 Gew.% vorpolymerisiert. Anschließend werden 1 800 ml Wasser, die 9 g Polyvinylpyrrolidon vom K-Wert 90 und 1,8 g $Na_4P_2O_7$ enthalten, zugesetzt und die Rührerdrehzahl auf 300 Upm erhöht. Durch Nachpolymerisation von 3 Stunden bei 110 °C, 3 Stunden bei 120 °C und 4 Stunden bei 140 °C wird bis zu einem Styrolumsatz 99 % auspolymerisiert.

$A_3$) Herstellung eines schlagfesten Polystyrols mit einer mittleren Teilchengröße von ca. 1,5 μm :

In einem 4 l-Rührkessel mit Blattrührer wird eine Lösung bestehend aus

1 283 g Styrol  
112 g Polybutadien (1,2-Vinylgehalt ca. 9 Gew.%)  
1,5 g t-Dedecylmercaptan  
1,5 g Octadecyl-3(3',5'-di-tert.-butyl-4'-hydroxiphenyl)-propionat  
1,5 g Dicumylperoxid  

bei 110 °C Innentemperatur und einer Rührerdrehzahl von 350 Upm bis zu einem Feststoffgehalt von 25,4 Gew.% vorpolymerisiert. Anschließend werden 1 800 ml Wasser, die 9 g Polyvinylpyrrolidon vom K-Wert 90 und 1,8 g $Na_4P_2O_7$ enthalten, zugesetzt und die Rührerdrehzahl auf 300 Upm erhöht. Durch Nachpolymerisation von 3 Stunden bei 110 °C und 4 Stunden bei 140 °C polymerisiert man bis zu einem Styrolumsatz 99 % aus.

II. Herstellung des Polyphenylenethers B

Zu einer Vorlage von 1,3 g Cu-I-Bromid und 33 g Dibutylamin werden 2 g 2,6-Dimethylphenol gegeben und bei 20 °C 5 Minuten unter Einleiten von Sauerstoff gerührt, dann wird im Verlauf von 30 Minuten eine Lösung von 204 g 2,6-Dimethylphenol in 1 400 ml Toluol eindosiert, anschließend wird noch 1,5 Stunden bei 20 °C gerührt. Die Reaktion wird in Gegenwart von 50 Liter/Stunde Sauerstoff durchgeführt. Nach Beendigung der Reaktion wird das Polymerisat mit 10 l Methanol gefällt. Das erhaltene Polymerisat hat nach dem Trocknen eine Intrinsic Viskosität $[\eta]$ 0,5 von 0,60 dl/g.

III. Elastomere Blockmischpolymerisate $C_n$

$C_1$) AB-Typ

Als Typ AB wurde ein hydriertes Blockcopolymerisat mit einem Styrolanteil von 50 Gew.% und einem mittleren Molekulargewicht von A von 42 000 verwendet ; B ist hydriertes Polybutadien.

$C_2$) Als ABA'-Typ

wurde ein hydriertes Blockmischpolymerisat mit scharf getrennten Styrolblöcken A, A' die zusammen 35 Gew.-% ausmachen und jeweils ein mittleres Molekulargewicht von 20 000 besitzen und hydrierten Polybutadienblöcken B, eingesezt.

$C_3$) ABA'-Typ

Es wurde ein nicht hydriertes Dreiblockcopolymeres eingesetzt, das als A, A'-Blöcke Polystyrolblöcke von zusammen 25 Gew.-% und einem jeweiligen mittleren Molekulargewicht von 28 000 und Polybutadienblöcke B enthält.

$C_4$) $(AB)_n$-X-Typ

Es wurde ein Sternblockcopolymeres mit Polystyrolblöcken A von zusammen 31 Gew.-% und einem mittleren Molekulargewicht der Blockäste von 14 000, einem zentralen Kopplungsteil X, der sich vom Siliziumtetrachlorid ableitet und Blöcken B, die aus Polybutadien bestehen.

IV. Ethylencopolymerisate $D_n$

Als Ethylencopolymerisate $D_n$ wurden folgende Polymeren eingesetzt

$D_1$) Ethylen/Buten-1-Copolymer

Buten-1-Anteil, 8 Gew.-% ; d = 0,919 $[g/cm^3]$, MFI 190/2,16 = 1 [g/10 Min.]

$D_2$) Ethylen/Octen-1-Copolymer

Octen-1-Anteil, 10 Gew.-% ; d = 0,920 $[g/cm^3]$, MFI 190/2,16 = 0,95 [g/10 Min.]

$D_3$) Ethylen/Propen-1-Copolymer

Propen-1-Anteil, 8 Gew.-% ; d = 0,916 $[g/cm^3]$, MFI 190/2,16 = 0,95 [g/10']

Die in der Tabelle angegebenen Gewichtsteile an schlagfest modifiziertem Polystyrol $A_n$, an Poly(2,6-dimethyl-1,4-phenylen) ether B, an elastomeren Blockmischpolymerisat $C_n$ und Ethylencopolymerisat $D_n$ wurden mit jeweils 0,8 Gewichtsteilen Tris(nonylphenyl) phosphit und 1,5 Gewichtsteilen eines Polyethylenwachses mit einer Schmelzviskosität von 1 300 cSt gemessen bei 120 °C auf einem Zweiwellenextruder bei 280 °C aufgeschmolzen, homogenisiert, gemischt und granuliert.

Aus den Mischungen wurden mittels einer Spritzgußmaschine bei 280 °C Prüfkörper hergestellt. Die Ergebnisse der Prüfungen sind in der Tabelle zusammengestellt.

(Siehe Tabelle Seite 7 f.)

Tabelle

| Beispiel | Schlagfestes Polystyrol | | Polyphenylen-ether | | elastomeres Blockmisch-polymeres | | Ethylen copolymerisat | | Vicat tempera-tur [°C] | Kerbschlag-zähigkeit [kJ/m²] | Bruchenergie [Nm] |
|---|---|---|---|---|---|---|---|---|---|---|---|
| | $A_n$ | [Gew.%] | B | [Gew.%] | $C_n$ | [Gew.%] | $D_n$ | [Gew.%] | | | |
| 1 | $A_1$ | 60 | B | 22,5 | $C_1$ | 5 | $D_1$ | 5 | 114 | 14 | 32 |
| | $A_2$ | 7,5 | | | | | | | | | |
| 2 | $A_1$ | 60 | B | 22,5 | C | 5 | $D_2$ | 5 | 115 | 16 | 35 |
| | $A_2$ | 7,5 | | | | | | | | | |
| 3 | $A_1$ | 49,5 | B | 40,5 | C | 5 | $D_2$ | 5 | 123 | 17 | 24 |
| | $A_2$ | 5,0 | | | | | | | | | |
| 4 | $A_1$ | 44,5 | B | 40,5 | $C_2$ | 5 | $D_2$ | 5 | 120 | 21 | 33 |
| | $A_2$ | 5,0 | | | | | | | | | |
| 5 | $A_3$ | 49,5 | B | 40,5 | $C_2$ | 5 | $D_2$ | 5 | 120 | 16 | 27 |
| 6 | $A_1$ | 44,5 | B | 40,5 | $C_3$ | 5 | $D_2$ | 5 | 121 | 17 | 26 |
| | $A_2$ | 5,5 | | | | | | | | | |
| 7 | $A_1$ | 44,5 | B | 40,5 | $C_4$ | 5 | $D_2$ | 5 | 122 | 19 | 30 |
| | $A_2$ | 5,0 | | | | | | | | | |
| 8 | $A_3$ | 49,5 | B | 40,5 | $C_2$ | 10 | $D_2$ | 5 | 117 | 21 | 38 |
| Vergleichs-beispiele (nicht er-findungs-gemäß) | | | | | | | | | | | |
| A | $A_1$ | 60 | B | 22,5 | | – | | – | 105 | 9 | 21 |
| | $A_2$ | 7,5 | | | | | | | | | |
| B | $A_1$ | 60 | B | 22,5 | $C_1$ | 5 | $D_3$ | 5 | 106 | 11 | 17 |
| | $A_2$ | 7,5 | | | | | | | | | |
| C | $A_1$ | 60 | B | 22,5 | $C_2$ | 10 | | – | 104 | 14 | 28 |
| | $A_2$ | 7,5 | | | | | | | | | |
| D | $A_1$ | 44,5 | B | 40,5 | $C_2$ | 10 | | – | 112 | 18 | 23 |
| | $A_2$ | 5,0 | | | | | | | | | |

**Patentanspruch**

Thermoplastische Formmassen auf der Grundlage von schlagfest modifizierten Styrolpolymerisaten, Polyphenylenethern und eine die Schlagfestigkeit verbessernde Kombination aus einem elastomeren Blockmischpolymerisat vom AB, ABA' und/oder $(AB)_n$-X-Typ, in welchem A und A' polymerisierte vinylaromatische Kohlenwasserstoffblöcke sind, B hydrierte und/oder nichthydrierte von polymerisierten konjugierten Dienen abgeleitete Blöcke darstellen, X für den Rest eines multifunktionellen Kupplungsmittels steht und n eine ganze Zahl von mindestens 3 darstellt, und einem Ethylencopolymerisat, dadurch gekennzeichnet, daß die Formmassen

A) 90-10 Gewichtsteile des elastomeren Blockmischpolymerisats und

B) 10-90 Gewichtsteile eines Ethylencopolymerisats enthalten, das eine Dichte von d = 0,910-0,945 $(g/cm^3)$ hat und aus

$b_1$) 80-99 Gew.-% Ethylen und

$b_2$) 1-20 Gew.-% eines 1-Olefins mit mindestens 4 C-Atomen

besteht.

**Claim**

Thermoplastic moulding materials based on styrene polymers which have been modified to make them impact-resistant, polyphenylene ethers and an impact-strength-improving combination of an elastomeric block copolymer of the AB, ABA' and/or $(AB)_n$-X type, in which A and A' are each polymerized vinylaromatic hydrocarbon blocks, B are hydrogenated and/or non-hydrogenated blocks derived from polymerized conjugated dienes, X is the radical of a multifonctional coupling agent, and n is an integer of at least 3, and on an ethylene copolymer, wherein the moulding materials contain

A) 90 to 10 parts by weight of the elastomeric block copolymer, and

B) 10 to 90 parts by weight of an ethylene copolymer which has a density d of from 0.910 to 0.945 $(g/cm^3)$, and consists of

$b_1$) 80 to 99 % by weight of ethylene, and

$b_2$) 1 to 20 % by weight of a 1-olefin having at least 4 carbon atoms.

**Revendication**

Matières à mouler thermoplastiques à base de polymérisats de styrène modifiés, résistants aux chocs, d'éthers de polyphénylène et d'une combinaison, améliorant la résistance aux chocs, d'un copolymérisat en blocs, élastomère, de type AB, ABA' et/ou $(AB)_n$-X, où A et A' sont des blocs d'hydrocarbures vinyl-aromatiques, polymérisés, B représente des blocs hydrogénés ou non hydrogénés, dérivés de diènes conjugués, polymérisés, X est mis pour le reste d'un agent de copulation multifonctionnel et n représente un nombre entier au moins égal à 3, et d'un copolymérisat d'éthylène, caractérisées par le fait que les matières à mouler contiennent

A) 90-10 parties en poids du copolymérisat en blocs élastomère et

B) 10-90 parties en poids d'un copolymérisat d'éthylène, qui a une densité de d = 0,910-0,945 $(g/cm^3)$ et est constitué par :

$b_1$) 80-99 % en poids d'éthylène et

$b_2$) 1-20 % en poids d'une 1-oléfine ayant au moins 4 atomes C.